# EUROPÄISCHE PATENTSCHRIFT

(11) **EP 1 799 521 B1**
(45) Veröffentlichungstag und Bekanntmachung des Hinweises auf die Patenterteilung: **02.09.2009**
(21) Anmeldenummer: 05792003.5
(22) Anmeldetag: 28.09.2005
(51) Int. Cl.: B60T 8/26, B60T 17/18, B62L 3/00

(54) **KRAFTRADBREMSANLAGE**
MOTORCYCLE BRAKE SYSTEM
SYSTEME DE FREINAGE DE MOTOCYCLETTE

(30) Priorität: 07.10.2004 DE 102004048823; 27.01.2005 DE 102005003774
(43) Veröffentlichungstag der Anmeldung: 27.06.2007
(73) Patentinhaber: Continental Teves AG & Co. oHG, 60488 Frankfurt (DE)
(72) Erfinder: LERCHENBERGER, Jens, 38690 Vienenburg (DE); NEU, Andreas, 76773 Kuhardt (DE); KASCHA, Reinhold, 63674 Altenstadt (DE)
(86) Internationale Anmeldenummer: PCT/EP2005/054881
(87) Internationale Veröffentlichungsnummer: WO 2006/040261

(56) Entgegenhaltungen:
- EP-A- 1 277 635
- WO-A-00/17025
- WO-A-02/22417
- WO-A-02/32736
- DE-A1- 10 110 060
- DE-A1- 10 209 984
- DE-A1- 10 333 323
- PATENT ABSTRACTS OF JAPAN Bd. 2000, Nr. 06, 22. September 2000 (2000-09-22) -& JP 2000 071963 A (NIPPON ABS LTD), 7. März 2000 (2000-03-07)
- PATENT ABSTRACTS OF JAPAN Bd. 1995, Nr. 02, 31. März 1995 (1995-03-31) -& JP 06 329006 A (SUZUKI MOTOR CORP), 29. November 1994 (1994-11-29)

## Beschreibung

Die Erfindung betrifft eine Kraftradbremsanlage nach dem Oberbegriff des Patentanspruchs 1.

Aus der EP 1 277 635 A2 ist bereits eine derartige Kraftradbremsanlage bekannt. Die Bremsanlage weist einen hydraulisch betätigbaren Vorderrad- und Hinterradbremskreis auf, die über ein paar fuß- bzw. handbetätigte Hauptbremszylinder verfügen. Zur Bremsschlupfregelung sind im Vorderrad- als auch Hinterradbremskreis elektromagnetisch aktivierbare Ein- und Auslassventile eingesetzt, sowie mit einer Pumpe zum Druckaufbau in den beiden Bremskreisen unabhängig von der Betätigung der beiden Hauptbremszylinder.

Zur Erfassung des dem Vorderradbremskreis zugeführten Hauptbremszylinderdrucks ist zwischen dem Einlassventil und dem Hauptbremszylinder am Vorderradbremskreis ein erster Drucksensor angeordnet. Ein zweiter Drucksensor erfasst den Radbremsdruck in einer am Hinterradbremskreis angeschlossenen Hinterradbremse. Zusätzlich kann auch ein den Hauptbremszylinderdruck im Hinterradbremskreis erfassender Drucksensor in Nähe des die Hinterradbremse betätigenden Hauptbremszylinders vorgesehen sein.

Damit bei der bekannten Kraftradbremse die Betätigung des am Vorderradbremskreis angeschlossenen Hauptbremszylinders erkannt werden kann, kommt der einwandfreien Funktion des ersten Drucksensors eine besondere Bedeutung zu, weshalb ein etwaiger Fehler des ersten Drucksensors sicher erkannt werden muss. Abhängig vom sicheren Erkennen des Hauptbremszylinderdrucks im Vorderradbremskreis kann sodann ein Hydraulikdruck in der Hinterradbremse gemäß einer Bremskraftverteilerkennlinie aufgebaut werden.

Daher ist es die Aufgabe der vorliegenden Erfindung, eine Kraftradbremsanlage der bekannten Art derart zu verbessern, dass eine sichere Erfassung des in die Vorderradbremse eingesteuerten Hauptbremszylinderdrucks gewährleistet ist.

Diese Aufgabe wird für eine Kraftradbremsanlage der angegebenen Art mit den kennzeichnenden Merkmalen des Patentanspruchs 1 gelöst.

Weitere Merkmale und Vorteile der Erfindung gehen aus den Unteransprüchen sowie aus der nachfolgenden Beschreibung eines Ausführungsbeispiels anhand einer Zeichnung hervor.

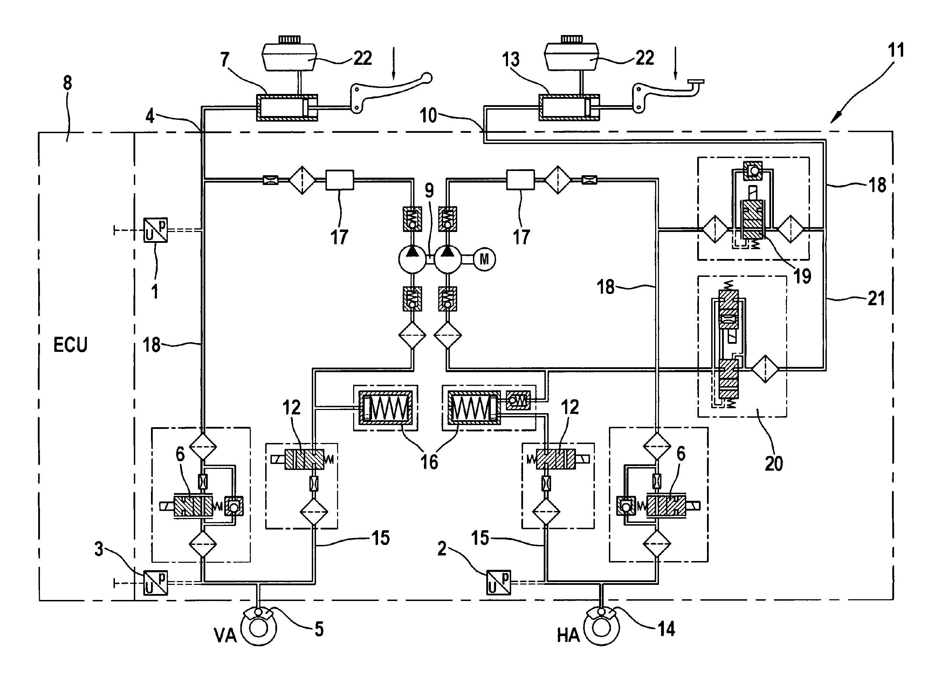

Die Figur 1 zeigt die Anordnung der erfindungsgemäßen Kraftradbremsanlage in schematischer Darstellung. Die Bremsanlage besteht aus einem hydraulisch betätigbaren Vorderrad- und Hinterradbremskreis 4, 10, mit jeweils einem am Vorderradbremskreis 4 angeschlossenen, durch Handkraft proportional betätigbaren Hauptbremszylinder 7 und mit einem fußkraftproportional betätigbaren Hauptbremszylinder 13 an der Hinterradbremse 14.

Zur Bremsschlupfregelung sind im Vorderrad- als auch Hinterradbremskreis 4, 10 elektromagnetisch betätigbare Ein- und Auslassventile 6, 12 eingesetzt, wobei jeweils das in Grundstellung geöffnete Einlassventil 6 in die Bremsleitung des Vorder- bzw. Hinterradbremskreises 4, 10 eingesetzt ist, welche den zugehörigen Hauptbremszylinder 7, 13 mit der Vorderrad- bzw. der Hinterradbremse 5, 14 verbindet. Das in Grundstellung geschlossene Auslassventil 12 ist jeweils in eine Rücklaufleitung 15 eines jeden Bremskreises eingesetzt, welche die Vorder- bzw. Hinterradbremse 5, 14 mit jeweils einem Niederdruckspeicher 16 und der Saugseite einer zweikreisig aufgeteilten Pumpe 9 verbindet, die nach dem Rückförderprinzip arbeitet. Die Pumpe 9 steht über in die beiden Bremskreise eingesetzte Geräuschdämpfungskammern 17 mit den Bremsleitungen 18 in Verbindung, so dass eine bedarfsgerechte Rückförderung des jeweils von der Vorder- bzw. Hinterradbremse 5, 14 abgelassenen Bremsflüssigkeitsvolumens gewährleistet ist.

Der Hinterradbremskreis 10 weist zusätzlich zu den bereits beschriebenen Merkmalen des Vorderradbremskreises 4 ein zwischen dem Hauptbremszylinder 13 und dem Einlassventil 6 in die Bremsleitung 18 eingesetztes, elektromagnetisch betätigbares Trennventil 19 auf, das in seiner Grundstellung geöffnet ist. Ferner ist zwischen dem Trennventil 19 und dem Hauptbremszylinder 13 an die Bremsleitung 18 des Hinterradbremskreises 10 ein über ein elektrisches Umschaltventil 20 führender Saugpfad 21 zur Pumpe 9 angeschlossen, wodurch der im Hinterradbremskreis 10 wirksame Pumpenteil bei elektrischer Erregung des Umschaltventils 20 Druckmittel zum Druckaufbau in der Hinterradbremse 14 aus dem Hauptbremszylinder 13 und dem am Hauptbremszylinder 13 angeschlossenen Ausgleichsbehälter 22 zu entnehmen und zur Hinterradbremse 14 zu fördern vermag, während das Trennventil 19 in seiner elektrisch erregten Sperrstellung verharrt.

Zur Erfassung des dem Vorderradbremskreis 4 zugeführten Hauptbremszylinderdrucks befindet sich stromaufwärts des Einlassventils 6 an der Bremsleitung 18 des Vorderradbremskreises 4 ein erster Drucksensor 1. Zur Erfassung des Radbremsdrucks im Hinterradbremskreis 10 ist ein zweiter Drucksensor 2 stromabwärts zum Einlassventil 6 am Hinterradbremskreis angeschlossen.

Durch die Einlassventile 6 lässt sich in der Zweikreisbremsanlage der in den Bremsleitungen 18 erzeugte Bremsdruck jederzeit begrenzen. Der Bremsdruckabbau in den Radbremsen geschieht über die elektromagnetisch aufschaltbaren Auslassventile 12 in Richtung der beiden Niederdruckspeicher 16.

Zur präzisen Erfassung des vom Hauptbremszylinders 7 in den Vorderradbremskreis 4 eingesteuerten Drucks sieht die Erfindung ein geeignetes Mittel (3) zur redundanten Messung des im Vorderradbremskreis (4) anstehenden Hydraulikdrucks vor, weshalb ein dritter Drucksensor (3) in der Kraftradbremsanlage angeordnet ist, der ergänzend zum ersten Drucksensor 3 den Hydraulikdruck im Vorderradbremskreis (5) erfasst.

Als dritter Drucksensor 3 wird zweckmäßigerweise der bereits aus dem zitierten Stand der Technik bekannte, bisher den Hauptbremszylinderdruck am Hinterradbremskreis erfassende Drucksensor verwendet, so dass die Gesamtanzahl der für die Kraftradbremsanlage verwendeten Drucksensoren vorteilhaft unverändert bleibt.

Der dritte Drucksensor 3 ist bevorzugt in Reihe zum ersten Drucksensor 1 am Vorderradbremskreis 4 angeschlossen. Dies hat den Vorteil, dass durch eine entsprechend geschickte Platzierung des ersten und dritten Drucksensors 1, 3 sowohl der Hauptbremszylinder- als auch der Vorderradbremsdruck bedarfsgerecht erfasst werden kann. Deshalb ist der dritte Drucksensor 3 zwischen der Vorderradbremse 5 und dem Einlassventil 6 am Vorderradbremskreis 4 angeschlossen, während der erste Drucksensor 1 am Vorderradbremskreis 4 zwischen dem Einlassventil 6 und dem am Vorderradbremskreis 4 angeschlossenen Hauptbremszylinder 7 angeschlossen ist.

Der mittels den beiden Drucksensoren 1, 3 redundant im Vorderradbremskreis 4 erfasste Hauptbremszylinderdruck bildet die Führungsgröße zur elektrischen Aktivierung der im Hinterradbremskreis 10 eingesetzten Pumpe 9, die im Zusammenwirken mit den Ein- und Auslassventilen 6, 12, dem Trenn- und Umschaltventil 19, 20 einen automatischen Bremsdruckaufbau im Hinterradbremskreis 10 gemäß einer im Steuergerät 8 abgelegten elektronischen Bremskraftverteilungskennlinie bewirkt, wenn ausschließlich der am Vorderradbremskreis 4 angeschlossene Hauptbremszylinder 7 betätigt wird.

Zur Auswertung von Signalen des ersten, zweiten und dritten Drucksensors 1, 2, 3 ist eine Logikschaltung im elektronischen Steuergerät 8 vorgesehen, in dem abhängig vom Auswerteergebnis der Drucksensorsignale mittels der elektrisch betätigbaren Pumpe 9 ein Hydraulikdruck im Hinterradbremskreis 10 erzeugt wird.

Das elektronische Steuergerät 8 verfügt ferner über eine Plausibilitätsschaltung, in welcher die Signale des sollwertgenerierenden ersten Drucksensors 1 mit den Signalen des dritten Drucksensors 3 verglichen werden, bevor die Pumpe 9 zum Druckaufbau im Hinterradbremskreis 10 aktiviert wird.

Das Steuergerät 8 bildet ein integrales Bestandteil einer Bremseinheit 11, das vorzugsweise zur elektrischen Kontaktierung auf die in der Bremseinheit 11 integrierten drei Drucksensoren 1, 2, 3 und die darin integrierten Ein- und Auslassventile 6, 11 aufgesteckt ist. Die Bremseinheit 11 lässt sich somit aufgrund der besonders kompakten Bauweise in Nähe einer Batterie an einem Kraftradrahmen befestigen.

Durch die gewählte Anordnung des dritten Drucksensors 3 lässt sich aufgrund der Information über den Druck in der Vorderradbremse 5 während einer Bremsschlupfregelung der Bremsdruckregelkomfort verbessern als auch die hydraulische Rückwirkung der durch das Ein- und Auslassventil 6, 12 hervorgerufenen Druckregelimpulse auf den (hand-)betätigten Hauptbremszylinder minimieren.

Grundsätzlich gilt:
1. Eine Blockierneigung des Vorder- bzw. des Hinterrades wird mittels nicht abgebildeter Raddrehzahlsensoren und deren Signalauswertung im Steuergerät 8 sicher erkannt. Das im Vorderrad- bzw. im Hinterradbremskreis 4, 10 angeordnete Einlassventil 6 wird über das Steuergerät 8 elektromagnetisch geschlossen, um einen weiteren Druckaufbau im Vorderrad- bzw. Hinterradbremskreis 4, 10 zu unterbinden.
2. Sollte zur Reduzierung der Blockierneigung zusätzlich ein weiterer Druckabbau im Vorderrad- bzw. Hinterradbremskreis 4, 10 erforderlich sein, so wird dies durch das Öffnen des jeweils mit dem Niederdruckspeicher 16 verbindbaren, normalerweise stromlos geschlossenen Auslassventil 12 erreicht. Das Auslassventil 12 wird geschlossen, sobald die Radbeschleunigung wieder über ein bestimmtes Maß hinaus anwächst. In der Druckabbauphase bleibt das entsprechende Einlassventil 6 geschlossen, so dass sich der im Vorderrad- bzw. Hinterradbremskreis 4, 10 erzeugte Hauptbremszylinderdruck nicht auf den Vorderrad- bzw. Hinterradbremskreis 4, 10 fortpflanzen kann.
3. Wenn die ermittelten Schlupfwerte wieder einen Druckaufbau im Vorderrad- bzw. Hinterradbremskreis 4, 10 erlauben, wird das Einlassventil 6 entsprechend der Anforderung des im Steuergerät 8 integrierten Schlupfreglers zeitlich begrenzt geöffnet. Das für den Druckaufbau erforderliche Hydraulikvolumen wird von der Pumpe 9 zu Verfügung gestellt.

Außerhalb der Bremsschlupfregelung erfolgt aufgrund des hydraulischen Schaltungskonzepts bei (fußkraftproportionaler) Betätigung des am Hinterradbremskreises 10 angeschlossenen Hauptbremszylinders 13 ausschließlich eine kraftproportionale Druckbeaufschlagung der Hinterradbremse 14, d.h. der Vorderradbremskreis 4 verharrt bis zur (handkraftproportionalen) Betätigung des am Vorderradbremskreis 4 angeschlossenen Hauptbremszylinders 7 drucklos.

Als weitere Besonderheit der vorgestellten Kraftradbremsanlage gilt, dass bei kraftproportionaler Betätigung des Vorderradbremskreises die Hinterradbremse durch eine geeignete Pumpenansteuerung mitgebremst wird. Die Pumpe 9 entnimmt hierzu über das elektrisch geöffnete Umschaltventil 20 Druckmittel aus dem Hauptbremszylinder 13 und fördert es zur Hinterradbremse 14. Hierbei verharrt das Trennventil 19 elektrisch betätigt in Schließstellung, wodurch gewährleistet ist, dass der Pumpendruck nicht in den Hauptbremszylinder 13 entweicht.

Die vorgestellte Kraftradbremsanlage zeichnet sich infolge des gewählten Aufbaus durch eine besonders sichere und komfortable Betätigung aus, bei gleichzeitiger Erhöhung der Druckregelcharakteristik im Blockierdruckregelfall.

### Bezugszeichenliste

- 1: Drucksensor
- 2: Drucksensor
- 3: Drucksensor
- 4: Vorderradbremskreis
- 5: Vorderradbremse
- 6: Einlassventil
- 7: Hauptbremszylinder
- 8: Steuergerät
- 9: Pumpe
- 10: Hinterradbremskreis
- 11: Bremseinheit
- 12: Auslassventil
- 13: Hauptbremszylinder
- 14: Hinterradbremse
- 15: Rücklaufleitung
- 16: Niederdruckspeicher
- 17: Geräuschdämpfungskammer
- 18: Bremsleitung
- 19: Trennventil
- 20: Umschaltventil
- 21: Saugpfad
- 22: Ausgleichsbehälter

## Patentansprüche

1. Kraftradbremsanlage mit einem hydraulisch betätigbaren Vorderrad- und Hinterradbremskreis (4, 10), mit zwei Hauptbremszylinder (7, 13) zur unabhängigen Betätigung beider Bremskreise, mit einem zur Bremsschlupfregelung in jedem Bremskreis vorgesehenen Ein- und Auslassventil (6, 12), mit einem ersten Drucksensor (1) zur Erfassung des dem Vorderradbremskreis (4) zuführbaren Hauptzylinderdrucks, sowie mit einem zweiten Drucksensor (2) zur Erfassung des Radbremsdrucks in einer am Hinterradbremskreis (10) angeschlossenen Hinterradbremse(14), mit jeweils einer Pumpe (9) zur Druckversorgung des Vorderrad- als auch Hinterradbremskreises (4, 10), wobei abhängig von einer kraftproportionalen Betätigung des am Vorderradbremskreises (4) angeschlossenen Hauptbremszylinders (7) die Hinterradbremse (14) vom Förderdruck der im Hinterradbremskreis (10) wirksamen Pumpe (9) beaufschlagbar ist, **dadurch gekennzeichnet, dass** zur kraftproportionalen Bremsung des Hinterradbremskreises (10) in den Vorderradbremskreis (4) ein dritter Drucksensor (3) zur redundanten Messung desjenigen Hydraulikdrucks vorgesehen ist, welcher von dem am Vorderradbremskreis (4) angeschlossen Hauptbremszylinder (7) in den Vorderradbremskreis (4) einleitbar ist, wobei der dritte Drucksensor (3) in Reihe zum ersten Drucksensor (1) am Vorderradbremskreis (4) angeschlossen ist und wobei der dritte Drucksensor (3) zwischen der Vorderradbremse (5) und dem Einlassventil (6) an den vorderradbremskreis (4) angeschlossen ist, und dass der erste Drucksensor (1) zwischen dem Einlassventil (6) und dem am Vorderradbremskreis (4) angeschlossenen Hauptbremszylinder (7) mit dem Vorderradbremskreis (4) verbunden ist.

2. Kraftradbremsanlage nach Anspruch 1, **dadurch gekennzeichnet, dass** mittels des dritten Drucksensors (3) in einer Bremsschlupfregelphase, in welcher der Druck in der Vorderradbremse (5) zu halten oder zu reduzieren ist, der Vorderradbremsdruck zum Zwecke der Verbesserung der Bremsdruckregelgüte erfasst wird.

3. Kraftradbremsanlage nach Anspruch 1 oder 2, **dadurch gekennzeichnet, dass** mittels der Signale des ersten und dritten Drucksensors (1, 3) der Hydraulikdruck im Vorderradbremskreis (4) als Führungsgröße zum weiteren pumpenunterstützten Druckaufbau im Hinterradbremskreis (10) redundant erfassbar ist.

4. Kraftradbremsanlage nach einem der vorangegangenen Ansprüche, **dadurch gekennzeichnet, dass** zur Auswertung von Signalen des ersten, zweiten und dritten Drucksensors (1, 2, 3) eine Logikschaltung in einem elektronischen Steuergerät (8) vorgesehen ist, in dem abhängig vom Auswerteergebnis der Drucksensorsignale mittels der elektrisch betätigbaren Pumpe (9) ein Hydraulikdruck im Hinterradbremskreis (10) erzeugbar ist.

5. Kraftradbremsanlage nach Anspruch 4, **dadurch gekennzeichnet, dass** das elektronische Steuergerät (8) über eine Plausibilitätsschaltung verfügt, in welcher die Signale des ersten Drucksensors (1) mit den Signalen des dritten Drucksensors (3) vergleichbar sind.

6. Kraftradbremsanlage nach Anspruch 4, **dadurch gekennzeichnet, dass** das Steuergerät (8) ein integrales Bestandteil einer Bremseinheit (11) bildet, wozu das Steuergerät (8) vorzugsweise zur elektrischen Kontaktierung auf die in der Bremseinheit (11) integrierten drei Drucksensoren (1, 2, 3) und die darin integrierten Ein- und Auslassventile (6, 12) aufgesteckt ist.

## Claims

1. Motorcycle brake system having a hydraulically actuable front wheel brake circuit and rear wheel brake circuit (4, 10), having two master brake cylinders (7, 13) for the independent actuation of the two brake circuits, having an inlet and outlet valve (6, 12) provided for brake slip regulation in each brake circuit, having a first pressure sensor (1) for measuring the master cylinder pressure which can be supplied to the front wheel brake circuit (4) and having a second pressure sensor (2) for measuring the wheel brake pressure in a rear wheel brake (14) which is connected to the rear wheel brake circuit (10), having in each case one pump (9) for the supply of pressure to the front wheel and rear wheel brake circuits (4, 10), with it being possible, as a function of a force-proportional actuation of the master brake cylinder (7) which is connected to the front wheel brake circuit (4), for the rear wheel brake (14) to be acted on by the delivery pressure of the pump (9) which acts in the rear wheel brake circuit (10), **characterized in that**, for force-proportional braking of the rear wheel brake circuit (10), a third pressure sensor (3) is provided in the front wheel brake circuit (4) for the redundant measurement of that hydraulic pressure which can be introduced into the front wheel brake circuit (4) by the master brake cylinder (7) which is connected to the front wheel brake circuit (4), with the third pressure sensor (3) being connected to the front wheel brake circuit (4) in series with the first pressure sensor (1), and with the third pressure sensor (3) being connected to the front wheel brake circuit (4) between the front wheel brake (5) and the inlet valve (6), and **in that** the first pressure sensor (1) is connected to the front wheel brake circuit (4) between the inlet valve (6) and the master brake cylinder (7) which is connected to the front wheel brake circuit (4).

2. Motorcycle brake system according to Claim 1,
**characterized in that**, in a brake slip regulating phase in which the pressure in the front wheel brake (5) should be held or reduced, the front wheel brake pressure is measured by means of the third pressure sensor (3) for the purpose of improving the brake pressure regulating accuracy.

3. Motorcycle brake system according to Claim 1 or 2, **characterized in that**, by means of the signals of the first and third pressure sensors (1, 3), the hydraulic pressure in the front wheel brake circuit (4) can be redundantly measured as a reference variable for the further pump-assisted build-up of pressure in the rear wheel brake circuit (10).

4. Motorcycle brake system according to one of the preceding claims, **characterized in that**, for the evaluation of signals of the first, second and third pressure sensors (1, 2, 3), a logic circuit is provided in an electronic control unit (8) in which, as a function of the evaluation result of the pressure sensor signals, a hydraulic pressure can be generated in the rear wheel brake circuit (10) by means of the electrically actuable pump (9).

5. Motorcycle brake system according to Claim 4,
**characterized in that** the electronic control unit (8) has a plausibility circuit in which the signals of the first pressure sensor (1) can be compared with the signals of the third pressure sensor (3).

6. Motorcycle brake system according to Claim 4,
**characterized in that** the control unit (8) forms an integral constituent part of a brake unit (11), for which purpose the control unit (8) is preferably plugged, for the purpose of making electrical contact, onto the three pressure sensors (1, 2, 3) which are integrated in the brake unit (11) and onto the inlet and outlet valves (6, 12) which are arranged therein.

## Revendications

1. Système de freinage de motocyclette, avec un circuit de freinage de roue avant et de roue arrière (4, 10) pouvant être actionné hydrauliquement, avec deux cylindres de freinage principaux (7, 13) pour l'actionnement indépendant des deux circuits de freinage, avec une soupape d'entrée et une soupape de sortie (6, 12) prévues dans chaque circuit de freinage pour la régulation du glissement du frein, avec un premier capteur de pression (1) pour détecter la pression du cylindre principal pouvant être transmise au circuit de freinage de la roue avant (4), et avec un deuxième capteur de pression (2) pour détecter la pression de frein de roue dans un frein de roue arrière (14) raccordé au circuit de freinage de la roue arrière (10), avec à chaque fois une pompe (9) pour l'alimentation en pression du circuit de freinage de roue avant et du circuit de freinage de roue arrière (4, 10), le frein de roue arrière (14) pouvant être sollicité par la pression de refoulement de la pompe (9) agissant dans le circuit de freinage de roue arrière (10) en fonction d'un actionnement proportionnel à la force du cylindre de freinage principal (7) raccordé au circuit de freinage de la roue avant (4), **caractérisé en ce que** pour le freinage proportionnel à la force du circuit de freinage de roue arrière (10), on prévoit dans le circuit de freinage de roue avant (4) un troisième capteur de pression (3) pour la mesure redondante de la pression hydraulique respective, qui peut être introduite par le cylindre de freinage principal (7) raccordé au circuit de freinage de roue avant (4) dans le circuit de freinage de roue avant (4), le troisième capteur de pression (3) étant raccordé en série avec le premier capteur de pression (1) au circuit de freinage de roue avant (4) et le troisième capteur de pression (3) étant raccordé entre le frein de roue avant (5) et la soupape d'entrée (6) au circuit de freinage de roue avant (4), et **en ce que** le premier capteur de pression (1) est connecté au circuit de freinage de roue avant (4) entre la soupape d'entrée (6) et le cylindre de freinage principal (7) raccordé au circuit de freinage de roue avant (4).

2. Système de freinage de motocyclette selon la revendication 1, **caractérisé en ce que** la pression de frein de roue avant est détectée au moyen du troisième capteur de pression (3) dans une phase de régulation du glissement du frein, dans laquelle la pression dans le frein de roue avant (5) doit être maintenue ou réduite, afin d'améliorer la qualité de la régulation de la pression de freinage.

3. Système de freinage de motocyclette selon la revendication 1 ou 2, **caractérisé en ce que** la pression hydraulique dans le circuit de freinage de roue avant (4) peut être détectée de manière redondante en tant que valeur de guidage pour une augmentation de pression subséquente assistée par la pompe dans le circuit de freinage de roue arrière (10), au moyen des signaux du premier et du troisième capteur de pression (1, 3).

4. Système de freinage de motocyclette selon l'une quelconque des revendications précédentes,
**caractérisé en ce que** pour l'analyse des signaux du premier, deuxième et troisième capteur de pression (1, 2, 3), on prévoit un circuit logique dans un appareil de commande électronique (8), dans lequel une pression hydraulique peut être produite dans le circuit de freinage de roue arrière (10) en fonction du résultat d'analyse des signaux de capteur de pression au moyen de la pompe (9) à commande électrique.

5. Système de freinage de motocyclette selon la revendication 4, **caractérisé en ce que** l'appareil de commande électronique (8) dispose d'un circuit de plausibilité dans lequel les signaux du premier capteur de pression (1) peuvent être comparés aux signaux du troisième capteur de pression (3).

6. Système de freinage de motocyclette selon la revendication 4, **caractérisé en ce que** l'appareil de commande (8) fait partie intégrante d'une unité de frein (11), et à cet effet l'appareil de commande (8) est enfoncé de préférence en vue du contact électrique sur les trois capteurs de pression (1, 2, 3) intégrés dans l'unité de frein (11) et les soupapes d'entrée et de sortie (6, 12) intégrées dans ceux-ci.
